# EUROPEAN PATENT SPECIFICATION

(11) **EP 3 159 437 B1**
(45) Date of publication and mention of the grant of the patent: **02.12.2020**
(21) Application number: 16195166.0
(22) Date of filing: 21.10.2016
(51) Int. Cl.: C25D 13/12, B05D 7/14, B05D 7/00, B05D 5/12, B05D 1/36, B32B 15/08, H01R 4/64, B62D 21/17, B62D 31/02

(54) **METHOD FOR ESTABLISHING A COMMON ELECTRIC CONNECTION IN AN INDUSTRIAL VEHICLE FOR THE TRANSPORT OF PEOPLE**
VERFAHREN ZUR HERSTELLUNG EINER GEMEINSAMEN ELEKTRISCHEN VERBINDUNG IN EINEM INDUSTRIEFAHRZEUG ZUR BEFÖRDERUNG VON PERSONEN
PROCÉDÉ D'ÉTABLISSEMENT D'UNE CONNEXION ÉLECTRIQUE COMMUNE DANS UN VÉHICULE INDUSTRIEL DE TRANSPORT DE PERSONNES

(30) Priority: 21.10.2015 IT UB20154989
(43) Date of publication of application: 26.04.2017
(73) Proprietor: IVECO FRANCE S.A.S., 69200 Vénissieux (FR)
(72) Inventor: GENDRE, Guy, 69003 Lyon (FR); GAUBERT, Pierre, 69033 Lyon (FR)
(74) Representative: Bongiovanni, Simone

(56) References cited:
- EP-A2- 1 595 978
- JP-A- H0 549 114
- JP-A- 2005 199 857
- US-A1- 2010 055 434

## Description

The present invention relates to a method for establishing a common electric connection in an industrial vehicle for the transport of people.

As it is known industrial vehicles for the transport of people have a modular structure wherein a number of pre-assembled modules are interconnected one with the other over a chassis provided with wheels. Finally the chassis and the interconnected modules are covered with a number of flat panels to create an exterior bodywork.

The modules are built separately and are made with metallic elements, for instance metallic tubes that are connected normally by soldering. After their constructions, the modules are subjected to a cataphoresis treatment to deposit over the external surface of the modules a layer of protection.

As it is known, Cathodic electrodeposition, or cataphoresis, is a fully automated process of painting by immersion, which is based on the movement of charged particles in an electric field (paint) towards an oppositely charged pole (metallic surface to be painted). The main objective of the coating process is to protect the surfaces from corrosion, and its properties make it the ideal treatment for this purpose. This technique also allows areas which are hard to reach, such as recessed areas, piping etc to be painted.

The deposited layer is non-conductive; for this reason, for establishing an electric common connection among modules it is necessary to use a number of electric cables provided with end terminals that are connected with the modules/the chassis.

Electric common connection of the modules is necessary because the 24 Volts battery has the negative terminal connected to the metallic structure of the vehicle so that just a positive cable is used to power each electric load (a lamp for instance) on the vehicle. The negative return of current transits through the metallic structure. This connection should be feasible in any point of the chassis which requires to have good continuity of mass in the chassis.

For stably connecting the end terminals with the metallic surfaces of the modules/the chassis it is necessary to make holes in the metal for the accommodation of screws that are used to secure the terminals over the metallic surfaces. This operation is rather long and costly. Moreover the metallic part where holes are made may be subjected to corrosion.

JP2005199857 describes an automobile body having metallic structure panels and an insulation layer covering at least a part of a surface of the metallic structure panels. The insulation layer has a conductor pattern provided by a conductive material.

The aim of the present invention is to create a method for establishing an electric common connection among modules where the common connection is established in a simple and cost effective way without incurring the need of making holes in the metal.

The above is obtained by the present invention that relates to a method for producing an industrial vehicle for the transport of people as claimed in claim 1.

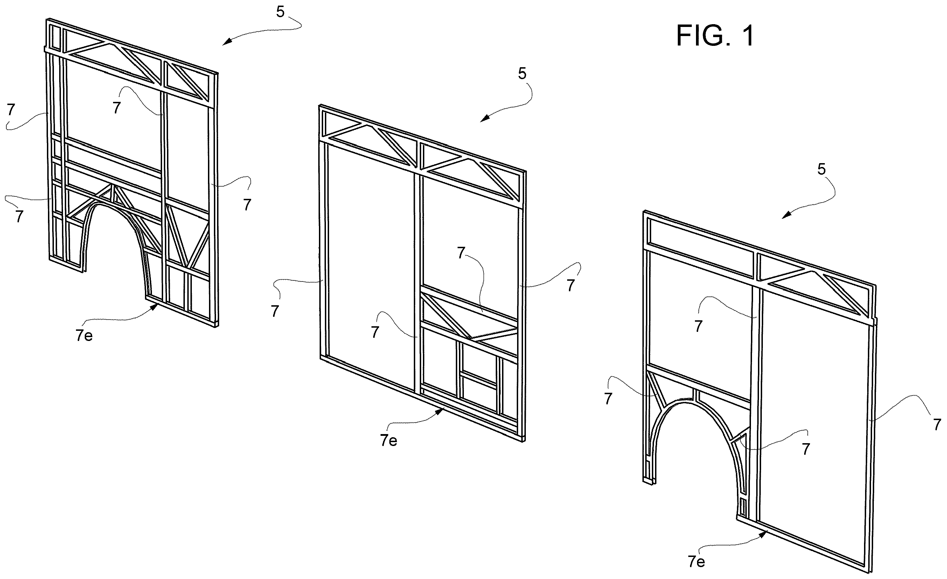

The invention will now be described with reference to the attaching drawings where figure 1 to 6 show successive steps of the method according to the invention.

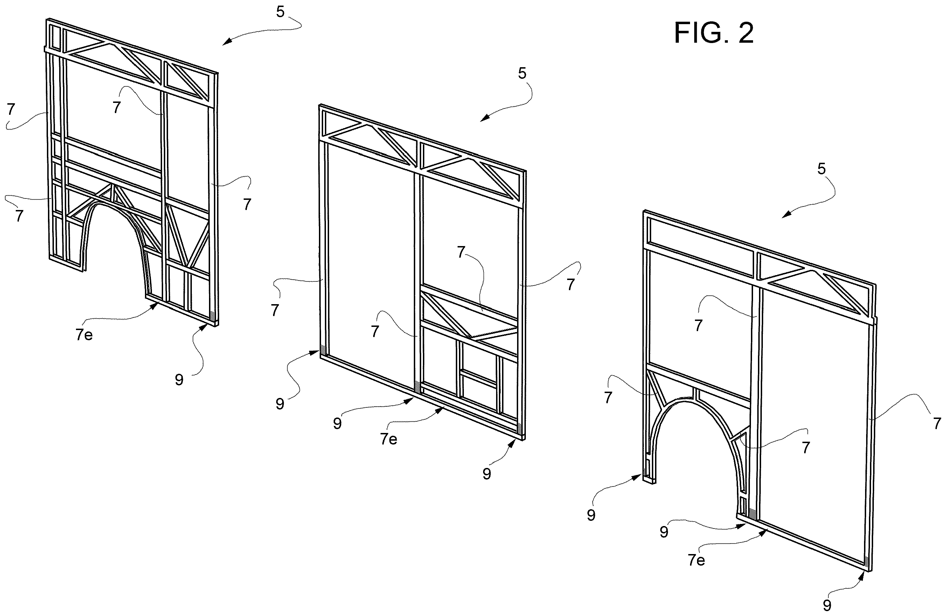

**Figure 1** **shows** a number of modules 5 for a an industrial vehicle for the transport of people (a BUS for instance) that are built according know techniques with metallic elements 7, for instance metallic tubes. For instance the metallic tubes 7 are connected one with the others by means of soldering techniques of known kind. Alternatively the metallic tubes 7 may be connected by means of screw or by means of glues. Examples of modules are the following: module for housing the engine, module for holding the side windows (glasses are glued to the module), side modules of the bus to hold baggages, front and rear modules of the bus, etc.
The metallic elements 7 have unprotected external metallic surfaces 7e that must be protected against corrosion by means of a cataphoresis treatment. According to the invention, before subjecting the modules to cataphoresis treatment, each module 5 is provided with at least one spot 9 (figure 2) made with a layer of protecting paint deposited over the external surface 7e of a metallic element 7. Spots 9 are realized - for instance - by blowing the protecting paint according known techniques and using a mask of known type (not shown). The paint is known metallic paint that is not attached by the cathaporesis treatment that does not adhere over the layer of paint.
Spots 9 may have, for instance, circular or square perimeter. Spot may cover two neighboring sides of tubes 7 having, for instance, square section.

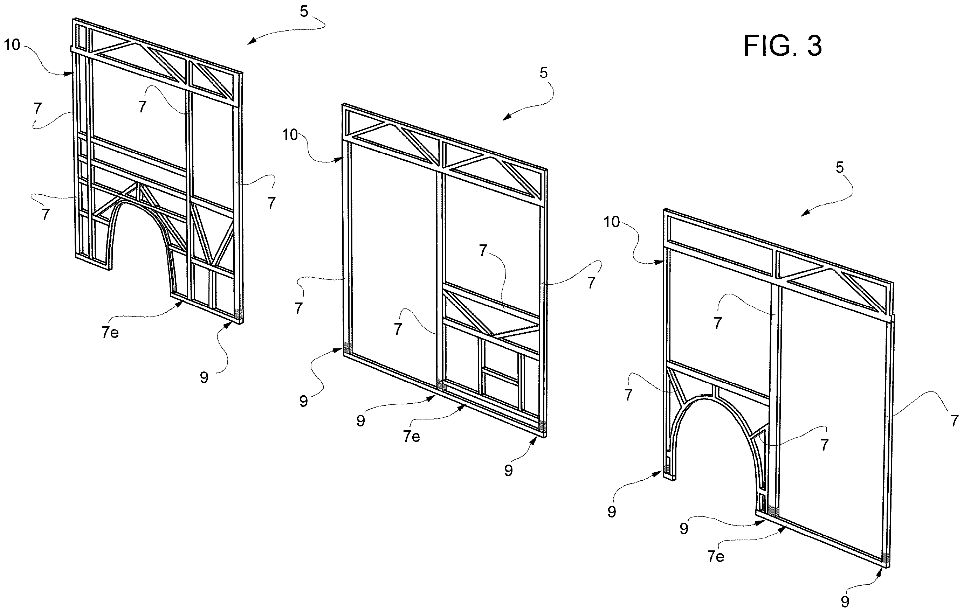

The modules 5 provided with spots 9 are subjected to a cathaporesis treatment bath (of a known type - not shown) so that a protecting insulating layer 10 (figure 3) is deposited to cover the external surfaces of the modules 5 except in the areas where spots 9 are realized where the insulating layer does not adhere.

Alternatively the spot may be realized by an adhesive protecting tab applied to the surface of the tubes 7. This adhesive protecting tab is detached after the cataphoresis method to uncover the steel surface of the tube that in that area is not covered with the insulating layer.

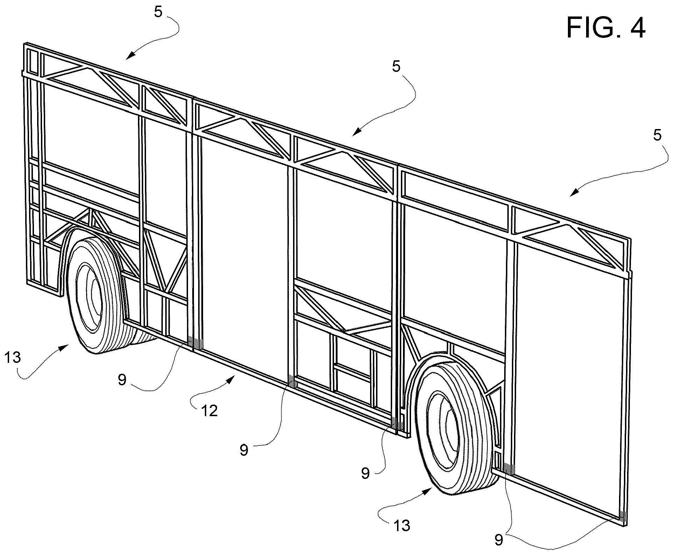

After the cathaporesis treatment, the modules 5 are connected one with the other over a basis 12 provided with wheels 13 to realize a chassis 14 of the vehicle according known techniques (figure 4).

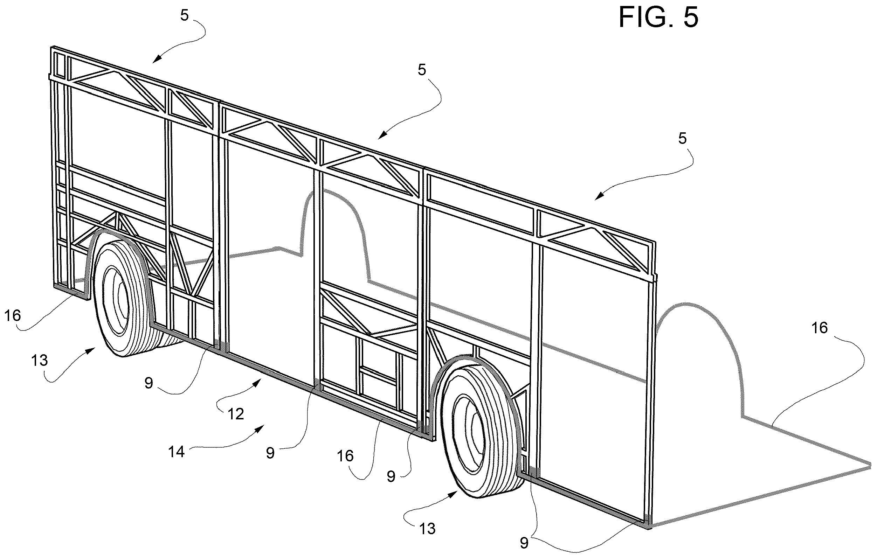

Subsequently is deposited by means of a known technique a continuous layer 16 of a conductive paint over one portion of the chassis 14 to cover the spots 9 that realize contact elements electrically interconnecting the modules 5 one with the other through the continuous layer 16; the continuous layer 16 thus realizes a ring shaped electrical connection (figure 5) for connecting all spots 9 and establishing a common voltage for all modules 5. The conductive paint is preferably a paint with a single component charged with a conductive powder (Silver, Copper, Nickel for instance), for instance metal or carbon fibers. The conductivity of the paint is very close to the electrical conductivity σ of the iron **(a(S/m) at 20°C =** 1.04x10⁷). For instance such a paint may be obtained from company EURO TECHONOLIGIES.

The continuous layer 16 is preferably ribbon shaped and extends over surfaces of the chassis 14 facing the outside of the chassis itself. The width of the layer may be close to the width of a tube 40-60 mm and thickness of about a 1 mm .

Alternatively, in an embodiment not part of the invention, the contact elements may be obtained as follows:
a) subjecting the modules to a cathaporesis treatment for depositing a protecting insulating layer 10 that covers the whole external surfaces of the metallic elements 7;
b) removing the protecting insulating layer 10 in localized areas to create an uncovered a portion of the external surface;
   In this case, the continuous layer 16 is deposited to cover the uncovered portions to establish the above electrical connection.
   The advantages of the present method are quite clear: the electrical connection among modules is obtained in a simple way, with low cost and without the use of the prior art end terminals. There is no need to make holes in the metal of the modules and the incurrence of rust is completely prevented.

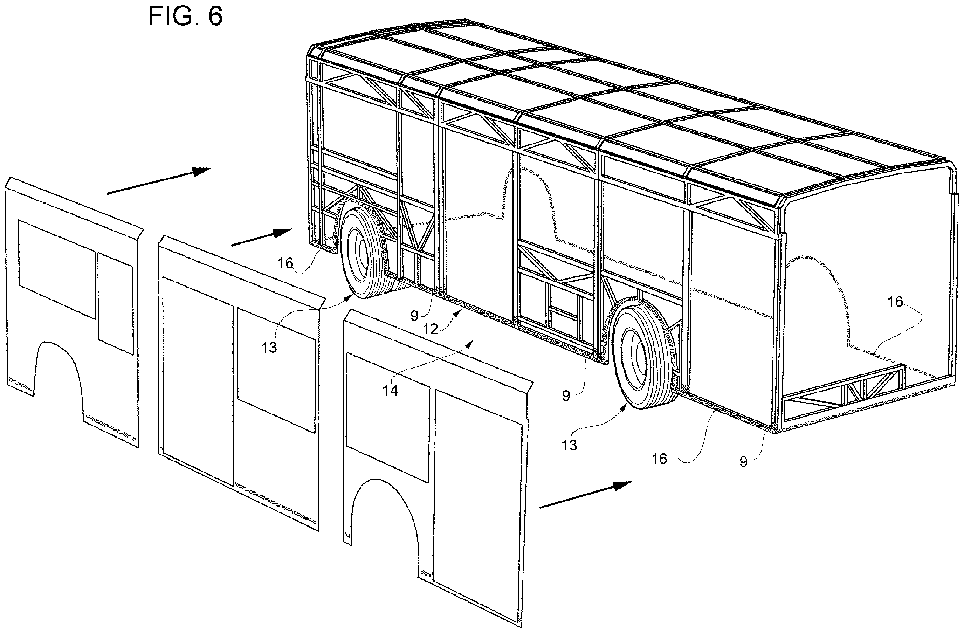

Finally the chassis 14 may be covered with a number of vehicle body modules 20 (figure 6) according to a known technique. The body modules 20 are generally flat and may be realized by means of a non-conductive material, plastic for instance. According to the present invention, every vehicle body module 20 has a surface that is covered with the conductive paint; the surface covered with the conductive paint has at least a portion facing the chassis and resting against the continuous layer 16 when the vehicle body module is stably connected to the chassis so that an electric connection is directly established among the modules 5 and the body modules 20. The use of prior art cables and connectors is thus avoided.

## Claims

1. Method for producing an industrial vehicle for the transport of people comprising the following phases:
**a)** building a number of modules (5) each of which is made with metallic tubes (7) interconnected;
**b)** realizing in each module at least one spot (9) by (b1) depositing over the external surface of a metallic tube (7) a layer of metallic protecting paint or (b2) applying an adhesive protecting tab to the surface of the metallic tubes (7) ;
**c)** subjecting the modules (5) provided with spots (9) to a cathaporesis treatment bath so that a protecting insulating layer (10) is deposited to cover the external surfaces of the modules except the areas where spots (9) are realized according to (b1) where the insulating layer does not adhere in order to create a contact portion (9) that is free from the protecting insulating layer (10);
**d)** for the case in which the at least one spot (9) is realized according to (b2) by applying an adhesive protecting tab to the surface of the tubes, subjecting the modules (5) provided with spots (9) to a cathaporesis treatment bath so that a protecting insulating layer (10) is deposited to cover the external surfaces of the modules and detaching the adhesive protecting tab to uncover the metallic surface of the tube that in that area is not covered with the insulating layer in order to create a contact portion (9) that is free from the protecting insulating layer (10);
**e)** after the cathaporesis treatment, connecting the modules (5) one with the other over a basis (12) provided with wheels (13) to realize a chassis (14) of the vehicle;
**f)** subsequently depositing a continuous layer (16) of an electrically conductive paint over one portion of the chassis (14) to cover the contact portions (9) that realize contact elements electrically interconnecting the modules (5) one with the other through the continuous layer (16) thus realizing a ribbon shaped layer extending over surfaces of the chassis (14) and facing the outside of the chassis itself for connecting all spots (9) and establishing a common voltage for all modules (5); wherein said electrically conductive paint is a paint with a single component charged with a conductive powder;
**g)** covering the chassis (14) with a number of vehicle body modules (20) ; every vehicle body module (20) has a surface that is covered with said electrically conductive paint; said surface covered with said electrically conductive paint has at least a portion facing the chassis and resting against the continuous layer (16) when the vehicle body module (20) is stably connected to the chassis so that an electric connection is established among the modules (5) and the body modules (20).

## Patentansprüche

1. Verfahren zur Herstellung eines Nutzfahrzeugs für den Personentransport, umfassend die folgenden Schritte:
a. Fertigen einer Anzahl an Modulen (5), von denen jedes miteinander verbundene Metallröhren (7) umfasst;
b. Herstellen mindestens eines Punktes (9) in jedem Modul durch (b1) Aufbringen einer Schicht einer metallischen Schutzfarbe auf die Außenfläche eines Metallrohres (7) oder (b2) Anbringen einer adhäsiven Schutzlasche auf die Oberfläche der Metallrohre (7);
c. Unterziehen der mit Punkten (9) versehenen Module (5) einem Kataphorese-Behandlungsbad, sodass eine schützende Isolierschicht (10) aufgetragen wird, um die Außenflächen der Module, bis auf die Flächen, wo die Punkte (9) nach (b1) hergestellt wurden und auf welchen die Isolierschicht nicht anhaftet, zu bedecken, um einen Kontaktbereich (9) zu verwirklichen, der frei von der schützenden Isolierschicht (10) ist;
d. falls mindestens ein Punkt (9) nach (b2) durch Anbringen einer adhäsiven Schutzlasche auf die Oberfläche der Röhren verwirklicht ist, Unterziehen der mit Punkten (9) versehenen Module (5) einem Kataphorese-Behandlungsbad, sodass eine schützende Isolierschicht (10) aufgetragen wird, um die Außenflächen der Module zu bedecken und Ablösen der adhäsiven Schutzlasche, um die metallische Oberfläche der Röhre freizulegen, welche in dem Bereich nicht mit der Isolierschicht bedeckt ist, um einen Kontaktabschnitt (9) zu verwirklichen, der frei von der schützenden Isolierschicht (10) ist;
e. nach der Kataphorese-Behandlung: Verbinden der Module (5) miteinander auf einer Basis (12), die mit Rädern (13) versehen ist, um ein Chassis (14) des Fahrzeugs zu schaffen;
f. anschließendes Aufbringen einer durchgehenden Schicht (16) einer elektrisch leitfähigen Farbe auf einen Bereich des Chassis (14), um die Kontaktbereiche (9), die Kontaktelemente darstellen, abzudecken, um die Module (5) durch die durchgehende Schicht (16) elektrisch miteinander zu verbinden, wodurch eine bandförmige Schicht verwirklicht wird, die sich über Oberflächen des Chassis (14) erstreckt und der Außenseite des Chassis selbst zugewandt ist, um alle Punkte (9) zu verbinden und eine gemeinsame Spannung für alle Module (5) herzustellen; wobei die elektrisch leitfähige Farbe eine Farbe mit einer einzelnen Komponente ist, angereichert mit einem leitfähigen Pulver;
g. Bedecken des Chassis (14) mit einer Anzahl von Fahrzeugkarosseriemodulen (20) von denen jedes Fahrzeugkarosseriemodul (20) eine Oberfläche aufweist, die mit der elektrisch leitfähigen Farbe bedeckt ist; wobei die mit der elektrisch leitfähigen Farbe bedeckte Oberfläche mindestens einen Bereich hat, der dem Chassis zugewandt ist und an der durchgehenden Schicht (16) anliegt, wenn das Fahrzeugkarosseriemodul (20) fest mit dem Chassis verbunden ist, so dass eine elektrische Verbindung zwischen den Modulen (5) und den Karosseriemodulen (20) hergestellt wird.

## Revendications

1. Procédé de production d'un véhicule industriel pour le transport de personnes comprenant les phases suivantes :
a) construction d'un certain nombre de modules (5) dont chacun est fait de tubes métalliques (7) interconnectés ;
b) réalisation dans chaque module d'au moins un point (9) en (b1) déposant sur la surface externe d'un tube métallique (7) une couche de peinture de protection métallique ou en (b2) appliquant une languette de protection adhésive sur la surface des tubes métalliques (7) ;
c) soumission des modules (5) pourvus de points (9) à un bain de traitement par cataphorèse de sorte qu'une couche isolante de protection (10) soit déposée pour recouvrir les surfaces externes des modules à l'exception des zones où les points (9) sont réalisés selon (b1) où la couche isolante n'adhère pas, afin de créer une partie de contact (9) exempte de la couche isolante de protection (10) ;
d) dans le cas où l'au moins un point (9) est réalisé selon (b2) en appliquant une languette de protection adhésive sur la surface des tubes, soumission des modules (5) pourvus de points (9) à un bain de traitement par cataphorèse de sorte qu'une couche isolante de protection (10) soit déposée pour recouvrir les surfaces externes des modules et détacher la languette de protection adhésive pour découvrir la surface métallique du tube qui, dans cette zone n'est pas couverte par la couche isolante, afin de créer une partie de contact (9) qui est exempte de la couche isolante de protection (10) ;
e) après le traitement par cataphorèse, connexion des modules (5) les uns aux autres sur une base (12) pourvue de roues (13) pour réaliser un châssis (14) du véhicule ;
f) dépôt ensuite d'une couche continue (16) d'une peinture électriquement conductrice sur une partie du châssis (14) pour recouvrir les parties de contact (9) qui réalisent des éléments de contact interconnectant électriquement les modules (5) les uns avec les autres à travers la couche continue (16), réalisant ainsi une couche en forme de ruban s'étendant sur les surfaces du châssis (14) et faisant face à l'extérieur du châssis lui-même pour connecter tous les points (9) et établir une tension commune pour tous les modules (5) ; dans lequel ladite peinture électriquement conductrice est une peinture avec un seul composant chargé avec une poudre conductrice ;
g) couverture du châssis (14) d'un certain nombre de modules de carrosserie de véhicule (20) ; chaque module de carrosserie de véhicule (20) a une surface qui est recouverte de ladite peinture électriquement conductrice ; ladite surface recouverte de ladite peinture électriquement conductrice a au moins une partie faisant face au châssis et reposant contre la couche continue (16) lorsque le module de carrosserie de véhicule (20) est connecté de manière stable au châssis, de sorte qu'une connexion électrique soit établie entre les modules (5) et les modules de carrosserie (20).
